# EUROPÄISCHE PATENTANMELDUNG

(11) **EP 0 593 849 A1**
(43) Veröffentlichungstag der Anmeldung: **27.04.1994**
(21) Anmeldenummer: 93109593.9
(22) Anmeldetag: 16.06.1993
(51) Int. Cl.: F16F 15/12, B29C 65/00, C08J 5/12, F16N 15/00

(54) **Verfahren zur Herstellung eines Torsionsschwingungsdämpfers**

(30) Priorität: 17.10.1992 DE 4235074
(71) Anmelder: Firma Carl Freudenberg, D-69469 Weinheim (DE)
(72) Erfinder: Schwibinger, Peter, Dr., Ann Arbor, MI 48105 (US)

(57) **Zusammenfassung**

Verfahren zur Herstellung eines Torsionsschwingungsdämpfers (1), bei dem ein Nabenring (2) und ein den Nabenring (2) mit radialem Abstand umschließender Schwungring (3) verwendet werden, wobei der Naben- (2) und der Schwungring (3) aus einem metallischen Werkstoff bestehen und wobei in den durch den Abstand gebildeten Spalt (4) unter Zuhilfenahme eines Gleitmittels ein Federkörper (5) aus gummielastischem Werkstoff eingeschossen wird. Der Federkörper (5) und/oder die den Spalt (4) begrenzenden Oberflächen von Naben- (2) und/oder Schwungring (3) werden vor dem Einschießen des Federkörpers (5) mit einem Gleitmittel benetzt, das aus einer Wasser-Salz-Lösung besteht.

## Beschreibung

Die Erfindung betrifft ein Verfahren zur Herstellung eines Torsionsschwingungsdämpfers, bei dem ein Nabenring und ein den Nabenring mit radialem Abstand umschließender Schwungring verwendet werden, wobei der Naben- und der Schwungring aus einem metallischen Werkstoff bestehen und wobei in den durch den Abstand gebildeten Spalt unter Zuhilfenahme eines Gleitmittels ein Federkörper aus gummielastischem Werkstoff eingeschossen wird.

Derartige Verfahren sind allgemein bekannt. Sie gelangen bevorzugt dann zur Anwendung, wenn ein in wirtschaftlicher Hinsicht günstiger Herstellungsprozeß gefordert ist und die Herstellung eines Torsionsschwingungsdämpfers innerhalb vergleichsweise kurzer Zeit erfolgen soll. Dabei ist allerdings zu beachten, daß die Höhe des übertragbaren Moments durch das Kraftmoment des Haftschlusses zwischen den zur Anwendung gelangenden Teilen begrenzt ist. Die Höhe des übertragbaren Moments ist für viele Anwendungsfälle zu gering, so daß beispielsweise das Postbonding-Verfahren zur Herstellung eines Torsionsschwingungsdämpfers angewendet wird.

Beim Postbonding-Verfahren wird ein Haftmittel auf den Naben- und den Schwungring aufgetragen, bevor der Gummi eingeschossen wird. Nach dem Einschießen des Federkörpers wird der Torsionsschwingungsdämpfer in einem Ofen für mehrere Stunden auf Temperaturen um 175° aufgeheizt. Derart hergestellte Torsionsschwingungsdämpfer weisen gute Gebrauchseigenschaften auf, wobei der Herstellungsprozeß zeitaufwendig und in wirtschaftlicher Hinsicht wenig befriedigend ist.

Der Erfindung liegt die Aufgabe zugrunde, einen Torsionsschwingungsdämpfer zu zeigen, der hohe Drehmomente übertragen kann ohne den Federkörper mit den angrenzenden Ringe zu vulkanisieren. Das Verfahren soll in wirtschaftlicher Hinsicht günstig sein und die Herstellung der Torsionsschwingungsdämpfer soll in kurzer Zeit erfolgen können. Das übertragbare Moment soll in Höhe vulkanisierter Torsionsschwingungsdämpfer liegen.

Diese Aufgabe wird erfindungsgemäß mit den kennzeichnenden Merkmalen von Anspruch 1 gelöst. Auf vorteilhafte Weiterbildungen nehmen die Unteransprüche Bezug.

Zur Erzielung eines hohen übertragbaren Moments und einer hohen Haftkraft zwischen dem Federkörper aus elastomerem Werkstoff und den angrenzenden Metalloberflächen von Schwungring und Nabenring ist es vorgesehen, daß der Federkörper und/oder die den radialen Spalt begrenzenden Oberflächen von Naben- und/oder Schwungring vor dem Einschießen des Federkörpers mit einem Gleitmittel benetzt werden, das aus einer Wasser-Salz-Lösung besteht. Das Gleitmittel wird gleichzeitig als Einschießfluid verwendet. Der Naben- und der Schwungring bestehen aus einem metallischen Werkstoff, der bei Beaufschlagung mit der Wasser-Salz-Lösung im Bereich seiner Oberflächen korrodiert. Kurze Zeit nach der Benetzung der Metalloberflächen setzt Korrosion ein, wodurch die Oberflächenrauhigkeit von Schwungring und Nabenring vergrößert wird. Die höhere Oberflächenrauhigkeit bewirkt einen deutlich höheren Haftbeiwert, so daß das übertragbare Moment des Torsionsschwingungsdämpfers mit eingeschossenem Federkörper ein Moment übertragen kann, das dem übertragbaren Moment vulkanisierter Torsionsschwingungsdämpfer nicht nachtsteht. In Abhängigkeit von der Auswahl des metallischen Werkstoffes für Nabenring und Schwungring und dem Salzgehalt in der Wasser-Salz-Lösung kann die Korrosionsbildung gesteuert werden, so daß sich der gewünschte Haftschluß innerhalb des Torsionsschwingungsdämpfers einstellt.

Die Wasser-Salz-Lösung kann einen Salzanteil von 5 bis 10 % aufweisen. Dadurch ist gewährleistet, daß bereits kurz nach Fertigstellung des Torsionsschwingungsdämpfers ein ausreichend großer Haftschluß innerhalb des Torsionsschwingungsdämpfers durch die Oberflächenrauhigkeit der dem Federkörper benachbarten Ringe besteht, ohne daß die Konzentration des Wasser-Salz-Lösung so groß ist, daß eine Zerstörung der metallischen Ringe zu befürchten wäre.

Der Nabenring und/oder der Schwungring können vor der Benetzung mit der Wasser-Salz-Lösung auf den dem Spalt zugewandten Oberflächenbereichen mit einer reibungsvergrößernden Oberflächenprofilierung versehen werden. Eine derartige Oberflächenprofilierung kann beispielsweise durch Strahlen der Oberfläche mit Sand oder Glasperlen erzielt werden, durch Prägen oder durch Drehen. Neben einer mechanischen Verkrallung der Oberflächenbereiche mit dem Federkörper ist von Vorteil, daß die Wasser-Salz-Lösung auf einer derart behandelten, relativ vergrößerten Oberfläche besser haften bleibt und auch während des Einschießens des Federkörpers nicht vollständig aus dem Spalt entfernt wird.

Die Wasser-Salz-Lösung wird vorteilhafterweise als Sprühnebel auf die zu benetzenden Oberflächen des Federkörpers und/oder der Ringe aufgebracht. Hierbei ist von Vorteil, daß die Teile mit einem gleichmäßigen Film der Lösung überzogen sind und die Konzentration in allen Oberflächenbereichen annähernd gleichgroß ist. Eine gleichmäßige Korrosionsbildung über die gesamte Fläche der dem Federkörper zugewandten Oberflächenbereiche der metallischen Ringe ist dadurch gewährleistet.

Zur Erzielung eines weiter verbesserten Haftschlusses kann es sich, unter Berücksichtigung der verwendeten Materialien von Nabenring, Schwungring und Federkörper als sinnvoll erweisen, wenn der Nabenring vor dem Benetzen mit Gleitmittel relativ zur Temperatur des Schwungrings auf eine Temperatur abgekühlt wird, die oberhalb des Gefrierpunkts der Wasser-Salz-Lösung liegt. Hierbei ist von Vorteil, daß sich der Nabenring im Anschluß an das Einschießen des Federkörpers allmählich wieder auf Raumtemperatur erwärmt, wodurch eine Ausdehnung in radialer Richtung bedingt ist. Zusätzlich zu der durch Korrosion aufgerauhten Oberfläche, die gegebenenfalls zusätzlich profiliert sein kann, wird dadurch eine vergrößerte radiale Vorspannung des Federkörpers bewirkt. Das Kraftmoment des Haftschlusses ist dadurch weiter erhöht, wodurch das übertragbare Moment ebenfalls vergrößert ist.

Zusätzlich oder alternativ besteht die Möglichkeit, daß der Schwungring vor dem Benetzen mit Gleitmittel relativ zur Temperatur des Nabenringes auf eine Temperatur erwärmt wird, die unterhalb des Verdampfungstemperatur der Wasser-Salz-Lösung liegt. Bei einem derart erweiterten Verfahren ist allerdings darauf zu achten, daß ein geeigneter elastomerer Werkstoff verwendet wird, dessen Kriechneigung auch bei Beaufschlagung mit höheren Temperaturen ein für das Herstellungsverfahren vertretbares Maß nicht überschreitet. Bei Abkühlung des Schwungrings nach der Montage auf Raumtemperatur erfolgt eine Durchmesserverkleinerung und eine Erhöhung der radialen Vorspannung auf den Federkörper.

Torsionsschwingungsdämpfer, die nach dem erfindungsgemäßen Verfahren hergestellt werden, weisen guten Gebrauchseigenschaften und ein hohes übertragbares Moment durch einen guten Haftschluß auf und sind in wirtschaftlicher Hinsicht kostengünstig herstellbar. Durch die Vermeidung eines zeitintensiven Vulkanisierungsprozesses können große Stückzahlen innerhalb vergleichsweise kurzer Zeit hergestellt werden.

In der als Anlage beigefügten Figuren ist ein Ausführungsbeispiel eines Torsionsschwingungsdämpfers dargestellt, der mit dem erfindungsgemäßen Verfahren herstellbar ist.

In Figur 1 ist der Torsionsschwingungsdämpfer in geschnittener Darstellung gezeigt.

Figur 2 zeigt den Torsionsschwingungsdämpfer nach Figur 1 entlang der Linie A-A geschnitten.

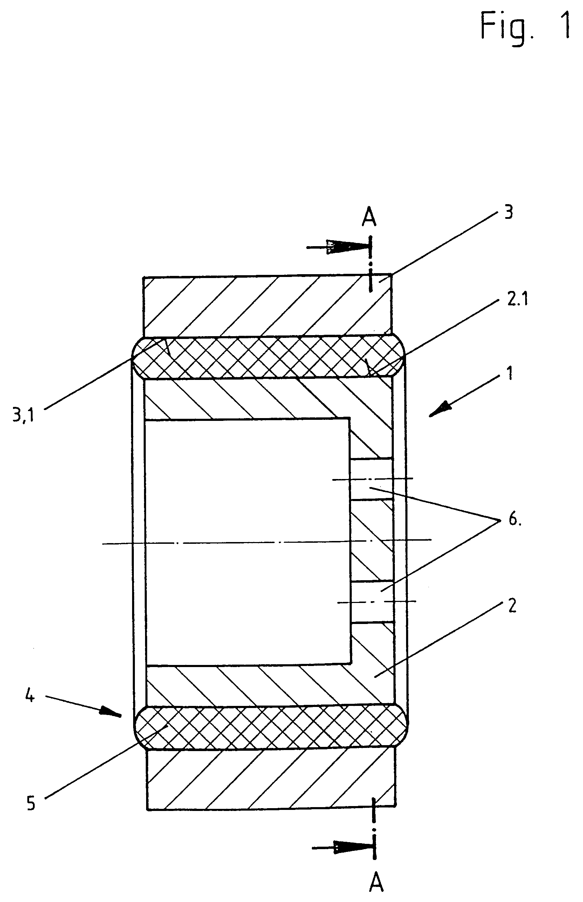

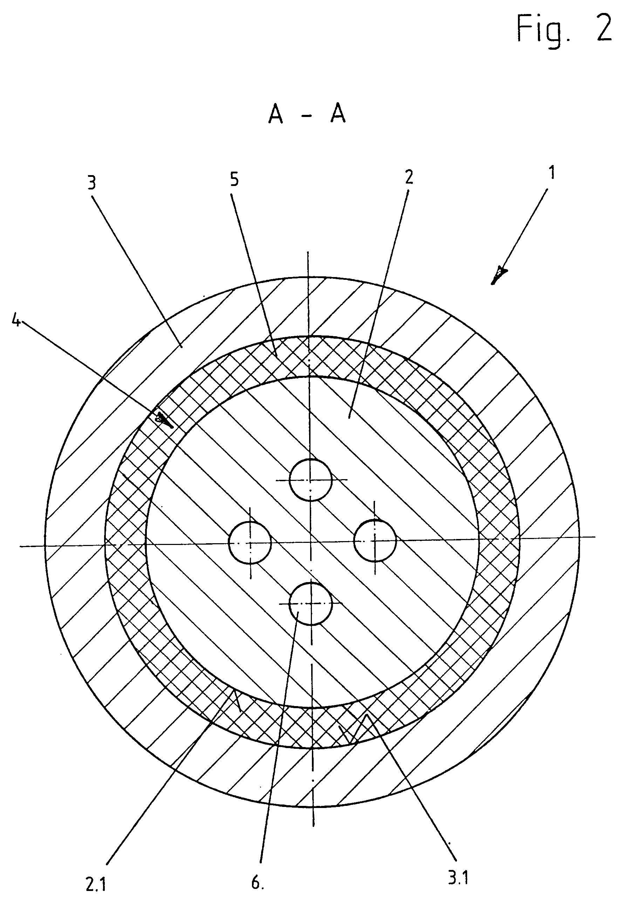

In der Figuren 1 und 2 ist ein Torsionsschwingungsdämpfer 1 gezeigt, der einen Nabenring 2 und einen den Nabenring 2 mit radialem Abstand umschließenden Schwungring 3 umfaßt. Der Nabenring 2 und der Schwungring 3 sind aus einem metallischen Werkstoff hergestellt. Der Federkörper 5, der innerhalb des Spaltes 4 angeordnet ist, besteht aus elastomerem Werkstoff und wird unter Zuhilfenahme eines Gleitmittels, das aus einer Wasser-Salz-Lösung besteht, in den Spalt 4 eingeschossen. Im Rahmen der vorliegenden Erfindung ist es vorgesehen, daß zumindest die dem Federkörper 5 zugewandten Oberflächenbereiche 2.1, 3.1 von Nabenring und Schwungring mit der Wasser-Salz-Lösung benetzt sind, bevor der Federkörper 5 eingeschossen wird. Die Oberflächenbereiche 2.1, 3.1 können zur weiteren Vergrößerung des übertragbaren Moments mit einer Oberflächenprofilierung versehen sein. Der Federkörper ist unter radialer Vorspannung innerhalb des Spaltes 4 zwischen dem Nabenring 2 und dem Schwungring 3 angeordnet und reibschlüssig in diesem gehalten. In diesem Ausführungsbeispiel ist der Nabenring 2 topfförmig gestaltet und mit Bohrungen 6 zur Befestigung versehen. Nach einer anderen, hier nicht dargestellten Ausführung kann der Schwungring 3 und/oder der Nabenring 2 als Riemenscheibe ausgebildet sein und zum Antrieb eines Nebenaggregats im Bereich einer Verbrennungskraftmaschine zur Anwendung gelangen.

Das erfindungsgemäße Verfahren kann in vielen Fällen zur Anwendung gelangen, um auf den jeweiligen Anwendungsfall abgestimmte und speziell gestaltete Schwingungsdämpfer einfach und kostengünstig in großen Stückzahlen herstellen zu können.

## Patentansprüche

1. Verfahren zur Herstellung eines Torsionsschwingungsdämpfers, bei dem ein Nabenring und ein den Nabenring mit radialem Abstand umschließender Schwungring verwendet werden, wobei der Naben- und der Schwungring aus einem metallischen Werkstoff bestehen und wobei in den durch den Abstand gebildeten Spalt unter Zuhilfenahme eines Gleitmittels ein Federkörper aus gummielastischem Werkstoff eingeschossen wird, dadurch gekennzeichnet, daß der Federkörper (5) und/oder die den Spalt (4) begrenzenden Oberflächen von Naben- (2) und/oder Schwungring (3) vor dem Einschießen des Federkörpers (5) mit einem Gleitmittel benetzt werden, das aus einer Wasser-Salz-Lösung besteht.

2. Verfahren nach Anspruch 1, dadurch gekennzeichnet, daß eine Wasser-Salz-Lösung mit einem Salzanteil von 5 bis 10 % verwendet wird.

3. Verfahren nach Anspruch 1 bis 2, dadurch gekennzeichnet, daß der Nabenring (2) und/oder der Schwungring (3) vor der Benetzung mit der Wasser-Salz-Lösung auf den dem Spalt (5) zugewandten Oberflächenbereichen (2.1, 3.1) mit einer reibungsvergrößernden Oberflächenprofilierung versehen werden.

4. Verfahren nach Anspruch 1 bis 3, dadurch gekennzeichnet, daß die Wasser-Salz-Lösung als Sprühnebel auf die zu benetzenden Oberflächen aufgebracht wird.

5. Verfahren nach Anspruch 1 bis 4, dadurch gekennzeichnet, daß der Nabenring (2) vor dem Benetzen mit Gleitmittel, relativ zur Temperatur des Schwungrings (3) auf eine Temperatur abgekühlt wird, die oberhalb des Gefrierpunkts der Wasser-Salz-Lösung liegt.

6. Verfahren nach Anspruch 1 bis 5, dadurch gekennzeichnet, daß der Schwungring (3) vor dem Benetzen mit Gleitmittel, relativ zur Temperatur des Nabenrings (2) auf eine Temperatur erwärmt wird, die unterhalb der Verdampfungstemperatur der Wasser-Salz-Lösung liegt.
